(19)

Europäisches
Patentamt
European
Patent Office
Office européen
des brevets

(11) **EP 3 314 927 B1**

(12) **EUROPEAN PATENT SPECIFICATION**

(45) Date of publication and mention
of the grant of the patent:
**08.09.2021 Bulletin 2021/36**

(21) Application number: **15895880.1**

(22) Date of filing: **26.06.2015**

(51) Int Cl.:
*H04W 4/00* (2018.01)    *H04W 64/00* (2009.01)

(86) International application number:
**PCT/CN2015/000467**

(87) International publication number:
**WO 2016/205980 (29.12.2016 Gazette 2016/52)**

(54) **MOBILE DEVICE LOCATOR**

MOBILVORRICHTUNGSLOKALISIERER

DISPOSITIF DE LOCALISATION DE DISPOSITIF MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.05.2018 Bulletin 2018/18**

(73) Proprietor: **EntIT Software LLC
Sunnyvale, California 94089 (US)**

(72) Inventors:
• **LI, Wei
Houston
Texas 77070 (US)**
• **ZHOU, Jie
Houston
Texas 77070 (US)**
• **WANG, Xiaoqiang
Shanghai 200444 (CN)**

(74) Representative: **Prock, Thomas
Marks & Clerk LLP
15 Fetter Lane
London EC4A 1BW (GB)**

(56) References cited:
EP-A1- 2 141 957        US-A1- 2011 032 152
US-A1- 2011 065 450      US-A1- 2012 330 600
US-A1- 2013 065 605      US-A1- 2014 120 931
US-A1- 2014 141 796      US-A1- 2014 171 118

• HUI WANG ET AL: "WLAN-Based Pedestrian
Tracking Using Particle Filters and Low-Cost
MEMS Sensors", POSITIONING, NAVIGATION
AND COMMUNICATION, 2007. WPNC '07. 4TH WO
RKSHOP ON, IEEE, PI, 1 March 2007 (2007-03-01),
pages 1-7, XP031080608, ISBN:
978-1-4244-0870-2
• HAOWEI WANG ET AL: "Optimization of fusion
algorithm for hybrid pedestrian localization and
navigation", POSITIONING NAVIGATION AND
COMMUNICATION (WPNC), 2012 9TH
WORKSHOP ON, IEEE, 15 March 2012
(2012-03-15), pages 163-168, XP032328943, DOI:
10.1109/WPNC.2012.6268758 ISBN:
978-1-4673-1437-4
• None

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

### BACKGROUND

Location based services (LBS) are useful in a plurality of applications. A location based service may provide or indicate a user's location on a map or relative to other objects, locations, establishments, etc. Accordingly, a user may navigate to other locations, determine directions to other locations, etc. LBS may be implemented both outdoors and indoors.

US2014171118 (A1) discloses methods, program products, and systems for using a location fingerprint database to determine a location of a mobile device.

US2011032152 (A1) discloses a method for positioning a mobile device.

US2012330600 (A1) discloses an electronic device, a positioning method, a positioning system, a computer program product, and a computer-readable recording medium. The electronic device includes at least one wireless transceiver, at least one measurement unit (MU), and a processor. The processor is coupled with the wireless transceiver and the MU. The processor obtains distances between a plurality of participant devices through the wireless transceiver, wherein the participant devices include the electronic device. The processor obtains a displacement of each of the participant devices through the wireless transceiver and the MU and determines the spatial location of each of the participant devices according to the distances and the displacements.

### BRIEF DESCRIPTION OF THE DRAWINGS

FIG. 1 illustrates an example environment of use for an example locator system including a sampling locator constructed in accordance with an aspect of this disclosure.

FIG. 2 is a block diagram of an example sampling locator that may be implemented by the locator system of FIG. 1.

FIGS. 3A-3B illustrate example analyses performed by the sampling locator of FIG. 2.

FIG. 4 is a flowchart representative of example machine readable instructions that may be executed to implement the sampling locator of FIG. 2.

FIG. 5 is another flowchart representative of example machine readable instructions that may be executed to implement the sampling locator of FIG. 2.

FIG. 6 is a flowchart representative of example machine readable instructions that may be executed to implement a portion of the machine readable instructions of FIG. 5 to implement the sampling locator of FIG. 2.

FIG. 7 is a block diagram of an example processor platform capable of executing the instructions of FIGS. 4, 5, and/or 6 to implement the sampling locator of FIG. 2.

Wherever possible, the same reference numbers will be used throughout the drawing(s) and accompanying written description to refer to the same or like parts.

### DETAILED DESCRIPTION

Examples disclosed herein involve a technique for a location based service (LBS) that may be implemented indoors or outdoors. In examples herein, a mobile device locator uses communication signals (e.g., Bluetooth Low Energy (BLE)), a particle filter, and movement sensor measurements to estimate a location of a mobile device. Accordingly, using examples herein, a user may estimate a location of a mobile device regardless of whether the mobile device is indoors or outdoors.

As used herein, indoors or indoor use refer to situations or implementations in the interior of a structure or under a structure that includes a roof (e.g., a building, a pavilion, a house, a warehouse, etc.). As used herein, "position" or "location" may be used interchangeably to refer to a physical location of a mobile device (e.g., a geographical location, a location relative to a building, a room, etc.).

In many outdoor LBSs, a Global Positioning System (GPS) may be used to triangulate a position of a mobile device. In some examples, cellular communication (e.g., 3G Global System of Mobile (GSM) communication, 4G LTE, etc.) may be used additionally or alternatively to the GPS to triangulate a location of a mobile device. However, GPS signals and/or cellular signals may not be strong enough to penetrate a structure to provide an accurate internal location, generally rendering such outdoor LBSs useless while indoors. In examples herein, communication signals, such as Bluetooth low energy (BLE) signals, and inertial movement measurements may be used to determine or estimate a location of a mobile device with relatively increased accuracy. In examples herein, an initial position of the mobile device may be estimated (e.g., using a fingerprint database), and subsequent locations of the mobile device may be estimated or calculated based on measured movement of the mobile device using a particle filter. Accordingly, examples disclosed herein may estimate a location and/or indicate an estimated location of a mobile device when the device is indoors.

An example method includes estimating a first position of a mobile device based on first communication signals, assigning a first set of particles to a number of respective first sampling locations within a threshold distance of the first position, adjusting the assignment of the first set of particles to second sampling locations based on movement of the mobile device, and estimating a second position of the mobile device based on the second sampling locations.

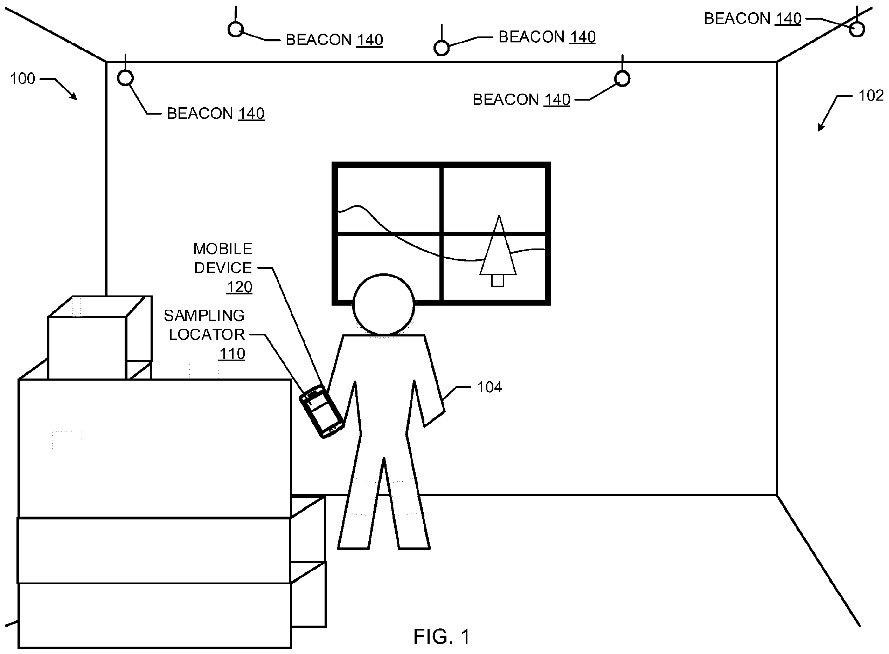

FIG. 1 illustrates an example environment of use for an example locator system 100, including a sampling locator 110 that may be implemented in accordance with an aspect of this disclosure. The example environment of use may be a room 102 of a building. The example locator system 100 includes the sampling locator 110, a mobile device 120, and beacons 140. In the illustrated example of FIG. 1, a user 104 is in the room 102 with the mobile device 120. The example mobile device 120 may include the example sampling locator 110. The sampling locator 110 may estimate the location (or position) of the user within the room 102 or the building in accordance with an aspect of this disclosure. In some examples, the mobile device 120 may indicate the location of the mobile device 120 in the room 102.

In the illustrated example of FIG. 1, the sampling locator 110 may receive communication signals (e.g., Bluetooth low-energy (BLE) signals) from beacons 140 (e.g., Bluetooth low-energy (BLE) beacons). Based on the communication signals, the sampling locator 110 may estimate an initial position of the mobile device 120 (and thus the user 104) by referring to a fingerprint database, as discussed below. After identifying the initial position of the mobile device 120, the sampling locator 110 may allocate (e.g., designate) a plurality of particles at sampling locations within a threshold distance (e.g., 1 meter, 2 meters, 5 meters, etc.) of the initial position. In examples disclosed herein, particles are virtual objects assigned to sampling locations or coordinates (e.g., (x,y) coordinates) of the sampling locations. For example, the sampling locator 110 may randomly select or designate a number (e.g., 500, 1000, 2000, etc.) of sampling coordinates within a threshold distance (e.g., a radius of 1 meter, 2 meters, etc.) of the initial position. In examples herein, the sampling locator 110 may calculate an estimated new position of the mobile device 120 in the room 102 by applying a random drift and movement calculation of the particles from the sampling locations based on measured movement of the mobile device 120 (e.g., using an accelerometer, a gyroscope, etc.). Examples herein may be iteratively performed/executed as the mobile device 120 moves throughout the room. Accordingly, the sampling locator 110 may iteratively estimate a location of the mobile device 120 to indicate a position of the mobile device 120 (e.g., on a display of the mobile device 120) as the user 104 moves throughout the room 120 or a building.

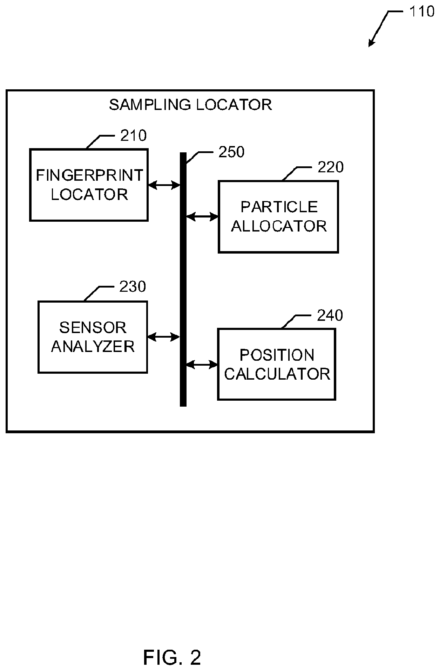

FIG. 2 is a block diagram of an example sampling locator 110 that may be used to implement the sampling locator 110 of FIG. 1. The example sampling locator 110 of FIG. 2 includes a fingerprint locator 210, a particle allocator 220, a movement analyzer 230, and a position calculator 240. An example communication bus 250 facilitates communication between the fingerprint locator 210, the particle allocator 220, the movement analyzer 230, and the position calculator 240. In examples herein, the fingerprint locator 210 estimates a position of the mobile device 120 using a fingerprint analysis, the particle allocator 220 allocates particles to sampling coordinates around the mobile device (e.g., within a threshold a distance), the movement analyzer 230 measures movement of the mobile device 120 and moves the particles relative to the sampling coordinates accordingly, and the position calculator 240 estimates a new position of the mobile device 120 based on the sampling coordinates.

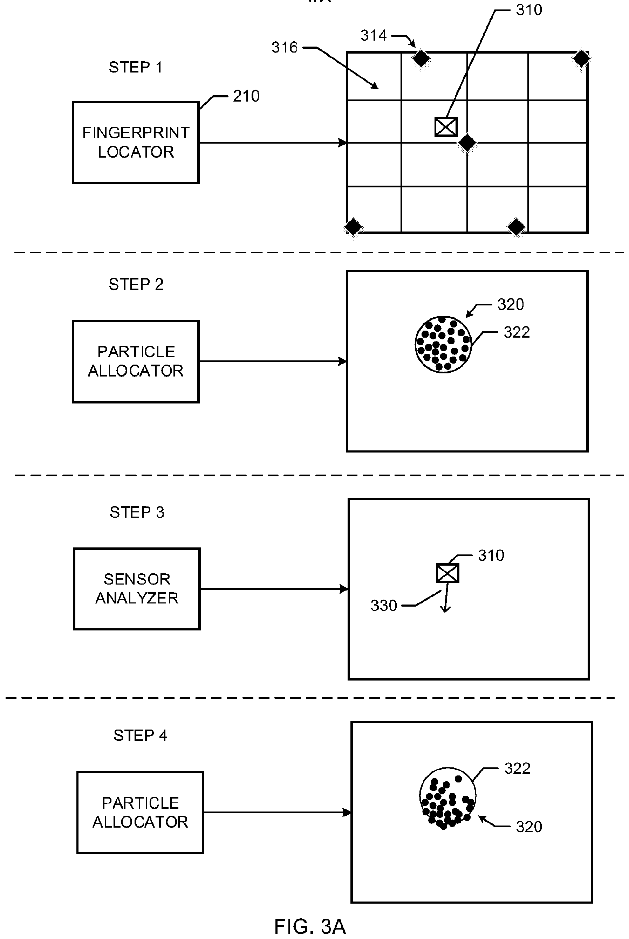

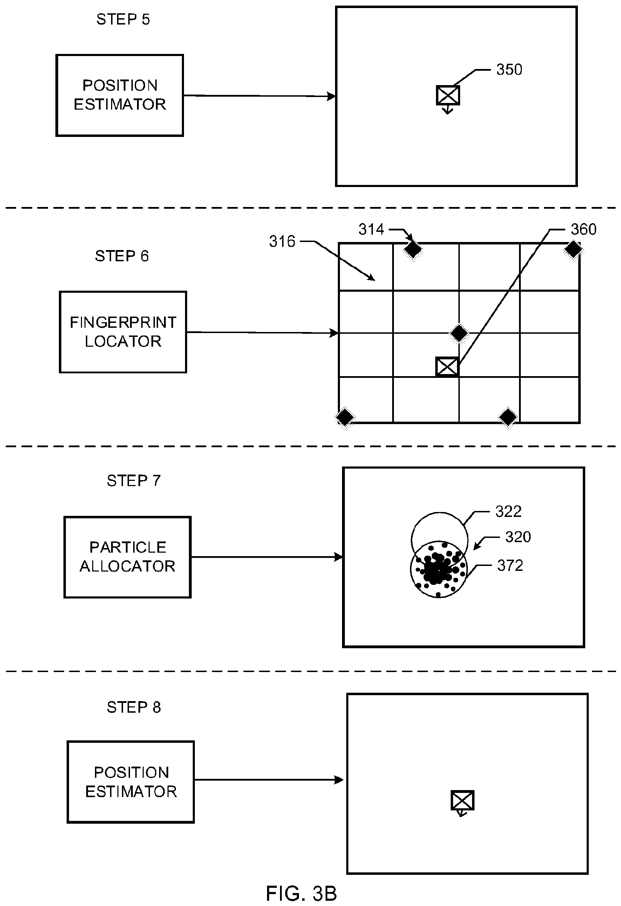

The example fingerprint locator 210 estimates a position of the mobile device 120. In some examples, the fingerprint locator 210 may estimate a position of the mobile device 120 using a fingerprint database. In examples herein, a fingerprint database refers to a database of communication signal measurements (e.g., received signal strength indications (RSSI)) measured by a mobile device 120 at designated locations (see FIG. 3) of an area (e.g., a building, a room, a geographic area, etc.). The example fingerprint database may be stored on the mobile device 120 or other device in communication with the mobile device 120, such as a server of the locator system 100. For example, the fingerprint locator 210 may compare RSSIs of the communication signals received by the mobile device 120 to stored RSSIs in a fingerprint database corresponding to measurements taken at a same or similar location (e.g., within a same room, area, etc.). In some examples, the fingerprint locator 210 may implement a discrete probability distribution (e.g., a Kullback-Leibler divergence) to estimate the location of the mobile device 120 using the fingerprint database. Accordingly, in such an example, using discrete probability distribution of RSSIs at sampling locations (P) of the fingerprint database, and a discrete probability distribution of RSSIs at the measuring location (Q) of the mobile device 120, the fingerprint locator 210 may estimate the initial position of the mobile device 120 by finding sampling locations that best match the RSSI distributions using the following:

$$D_{\mathrm{KL}}(P\|Q) = \sum_i P(i) \ln \frac{P(i)}{Q(i)}.$$

An example fingerprint database used herein may be created and developed using any suitable techniques (e.g., by recording RSSIs at designated locations of an area). In some examples, the fingerprint locator 210 iteratively estimates an initial position of the mobile device 120. For example, the fingerprint locator 210 may periodically (e.g., every five seconds) use the fingerprint database to estimate the location of the mobile device 120 in the room 102 every five seconds, every ten seconds, etc. In some examples, the fingerprint locator 210 may estimate the location of the mobile device 120 after detecting movement of the mobile device 120 (e.g., based on measurements of an accelerometer or gyroscope). In examples herein, the fingerprint locator 210 may provide determined location information of the mobile device 120 (e.g., estimated coordinates) to an application (e.g., a navigation application, a mapping application, etc.) or user interface of the mobile device 120.

The example particle allocator 220 of FIG. 2 allocates particles (e.g., virtual analytic objects of a particle filter) to coordinates of sampling locations within a threshold distance (e.g., 1 meter, 2 meters, etc.) of the position of the mobile device 120 estimated by the fingerprint locator 210. The particle allocator 220 may include or be implemented by a particle filter. In examples herein, the particle allocator 220 may determine a threshold distance (e.g., a radius of a circular area) or area around a location (e.g., the position estimated by the fingerprint locator 210) of the mobile device 120 and randomly allocate a number (e.g., 500, 1000, 2000, etc.) of particles to coordinates within the threshold distance. The example threshold distance may be selected by a user, a default of the particle filter, or determined based on characteristics of the sampling locator 110 or locator system 102. In examples herein, the particle allocator 220 may iteratively or periodically (e.g., every second) allocate or move the particles based on measured movement of the mobile device 120 determined by the sensor analyzer 230, as discussed below.

The example sensor analyzer 230 may analyze movement using sensors (e.g., accelerometer, gyroscope, etc.) of the mobile device 120 or devices in communication with the mobile device 120. Based on the measured movement, the sensor analyzer 230 provides movement information (e.g., estimated direction, speed, altitude, etc.) to the particle allocator 220. The example particle allocator 220 may then move the allocated particles to new coordinates corresponding to the measured movement. In some examples, the particle allocator 220 may also apply a random drift (e.g., $(\Delta x, \Delta y)$) when moving the particles based on the measured movement. The example random drift applied to the particles may be different for each of the particles. Accordingly, the movement of the particles based on the movement of the mobile device 120 may relatively indicate a new position of the mobile device 120.

The example position calculator 240 of FIG. 2 estimates the position of the mobile device 120. For example, after a period of time (e.g., 1 second, 5 seconds, etc.) or after detecting movement of the mobile device 120, the position calculator 240 may analyze the particle locations to estimate or calculate a position of the mobile device 120. For example, the position calculator 240 may calculate an average (e.g., a mean) of the coordinates of the particles to find the coordinates of the location of the mobile device 120. Further, the position calculator 240 may provide estimated location information of the mobile device 120 (e.g., coordinates) to an application (e.g., a navigation application, a mapping application, etc.) or user interface of the mobile device 120.

In examples herein, after each iteration of the fingerprint locator 210 estimating the position of the mobile device 120, the particle allocator 220 (using the particle filter) may resample the particles around the position of the mobile device 120 estimated by the fingerprint locator 210. For example, weights may be applied to each of the particles. A default weight value (e.g., a weight value '1') may be given to each newly created particle. Therefore, after the fingerprint locator 210 estimates an initial position, all newly created particles may have a same weight, and after the fingerprint locator 210 estimates a subsequent position, the particles may all have different weights. In some examples, after the particle allocator 220 allocates new particles to new sampling coordinates, the particle allocator 220 may estimate and assign weights to the particles based on the distance between the new sampling coordinates and the estimated position of the mobile device 120. The weights may be representative of a likelihood that the corresponding particle is located near the mobile device 120 (e.g., the greater the weight, the closer the sampling location of the particle is to the estimated position of the mobile device 120). Accordingly, the particle allocator 220 adjusts weights of the particles based on their proximity to the position of the mobile device 120 estimated by the fingerprint locator 210.

The particle allocator 220 may resample the particles by removing particles that have less than a threshold weight (e.g., less than '1') and adding a same number of particles having new weights to the area around the location of the mobile device 120. In examples herein, the particle allocator 220 may move the designated particles based on measured movement of the mobile device 120 at a faster rate (e.g., every second) than the particle allocator 220 resamples the particles around the subsequent locations of the mobile device 120 (e.g., every five seconds).

Accordingly, as the mobile device 120 moves around the room 102 of FIG. 1, the position calculator 240 calculates locations of the mobile device 120 by averaging the coordinates of the particles, and the particles that are averaged are determined using weights corresponding to determined proximity of the particles to locations estimated by the fingerprint locator 210. Using location information (e.g., coordinates of the room 102, coordinates of a building of the room 102, coordinates of a map of the room, etc.) from the fingerprint locator 210 and/or position calculator 240, the sampling locator 110 and/or mobile device 120 may indicate the position of the mobile device 120 on a display (e.g., a display of the mobile device 120) to the user 104.

While an example manner of implementing the sampling locator 110 of FIG. 1 is illustrated in FIG. 2, at least one of the elements, processes and/or devices illustrated in FIG. 2 may be combined, divided, re-arranged, omitted, eliminated and/or implemented in any other way. Further, the fingerprint locator 210, the particle allocator 220, the sensor analyzer 230, the position calculator 240 and/or, more generally, the example sampling locator 110 of FIG. 2 may be implemented by hardware and/or any combination of hardware and executable instructions (e.g., software and/or firmware). Thus, for example, any of the fingerprint locator 210, the particle allocator 220, the sensor analyzer 230, the position calculator 240 and/or, more generally, the example sampling locator 110 could be implemented by at least one of an analog or digital circuit, a logic circuit, a programmable processor, an application specific integrated circuit (ASIC), a programmable logic device (PLD) and/or a field programmable logic device (FPLD). When reading any of the apparatus or system claims of this patent to cover a purely software and/or firmware implementation, at least one of the fingerprint locator 210, the particle allocator 220, the sensor analyzer 230, and/or the position calculator 240 is/are hereby expressly defined to include a tangible computer readable storage device or storage disk such as a memory, a digital versatile disk (DVD), a compact disk (CD), a Blu-ray disk, etc. storing the executable instructions. Further still, the example sampling locator 110 of FIG. 2 may include at least one element, process, and/or device in addition to, or instead of, those illustrated in FIG. 2, and/or may include more than one of any or all of the illustrated elements, processes and devices.

FIGS. 3A-3B illustrate example analyses performed by the sampling locator 110 of FIG. 2. FIGS. 3A-3B are provided as an example to visualize the analyses performed by the sampling locator 110 in frames. Each of the frames in Steps 1-8 may be representative of the room 102 of FIG. 1. In the example of FIGS. 3A-3B, the respective elements/components of the sampling locator 110 perform eight steps (Steps 1-8) to estimate the location of the mobile device 120. In some examples, more or less than the eight steps of FIGS. 3A-3B may be executed to estimate the location of the mobile device 120, however, the example Steps 1-8 of FIGS. 3A-3B are illustrated to represent example analyses performed herein. Each of the Steps 1-8 of FIGS. 3A-3B may be iteratively executed before the following step or executed in a different order than that presented in the example of FIGS. 3A-3B.

At Step 1 in FIG. 3A, the fingerprint locator 210 estimates a location 310 of the mobile device 110. For example, the fingerprint locator 210 may compare RSSIs measured from the beacons 340 (represented by black diamonds) to RSSIs in a fingerprint database. The example RSSIs in the fingerprint database may be RSSIs measured at designated locations along the grid lines of a training grid 316 during a calibration or setup of the locator system 100. Accordingly, at Step 1 in the example of FIGS. 3A-3B, the fingerprint analyzer 210 estimates that the mobile device is at the location 320.

At Step 2 of FIG. 3A, the particle allocator 220 allocates a plurality of particles 320 (represented by black dots) within an area 322. The example area may be estimated based on a threshold radius from the location 310. Therefore, the particle allocator 220 may randomly assign the particles 320 to coordinates within that area 322.

At Step 3 of FIG. 3A, the sensor analyzer 230 detects and measures movement 330 of the mobile device from the location 310. The sensor analyzer 230 may detect the movement 330 based on the inertial measurements from an accelerometer, gyroscope, or any other sensor (e.g., infrared, camera, etc.) of the mobile device 120.

At Step 4 of FIG. 3A, in response to detecting the movement 330, the particle allocator 220 may move the particles (e.g., by adjusting the values of the coordinates of the particles) based on the measured movements. Further, the particle allocator 220 may apply a different random drift ($\Delta x$, $\Delta y$) to each of the particles. As illustrated in step 4, the particles 320 moved away from the area 322 corresponding to the movement 330.

At Step 5 of FIG. 3B, the example position calculator 240 calculates a position 350 of the mobile device 120 based on the location of the particles 320 in Step 4. For example, at Step 5, the position calculator 240 may average the coordinates of the particles 320 of step 4 of FIG. 3A. In examples herein, Steps 3, 4, and 5 may be iteratively performed a number of times (e.g., 5, 10, 20, etc.) or for a threshold period of time (e.g., every second for five seconds, etc.) before advancing to Step 6 of the example of FIGS. 3A-3B.

At step 6 of FIG. 3B, the example fingerprint locator 210 estimates a new location 360 of the mobile device 120 using RSSIs from the beacons 314 and the fingerprint database (in a similar fashion as Step 1 of FIG. 3A). In examples herein, a threshold period of time may pass between Step 1 and Step 6, during which the fingerprint locator 210 estimates the location of the mobile device 120 using the fingerprint database.

At step 7, in response to receiving location information from fingerprint locator 210, the particle allocator 220 resamples the particles 320 to get a new set of particles 370. In step 7, the particle allocator 220 adjusts weights of the particles 320 of step 2 based on the proximity of the particles 320 to the new location 360. Based on the adjusted weights, the particle allocator 220 may then remove some of the particles 320 that are not within proximity of the new location 360 (e.g., using a threshold weight value) and add a same number of new particles to create the new set of particles 370 of Step 7. Thus, the particles 370 may include some of the particles 320 (e.g., those satisfying a threshold weight). For the sake of illustration, the particles in both the area 322 and new area 372 may have been some of the particles 320 from step 2. Accordingly, the particle allocator 220, at step 7, determines a new set of particles for estimating or calculating the location of the mobile device 120.

At step 8, the position calculator 240 estimates the position 380 of the mobile device 120 by calculating an average of the coordinates of the particles 370 (e.g., similar to Step 5). In some examples, prior to step 8, the sensor analyzer 230 may measure and/or provide movement information to the particle allocator and/or position calculator 240 for estimating the location 380 of the mobile device 120.

Accordingly, the example steps 1-8 of FIGS. 3A-3B illustrate the analyses performed by the components/elements of the sampling locator 110 of FIG. 2 to estimate the location of the mobile device 120 in accordance with examples herein.

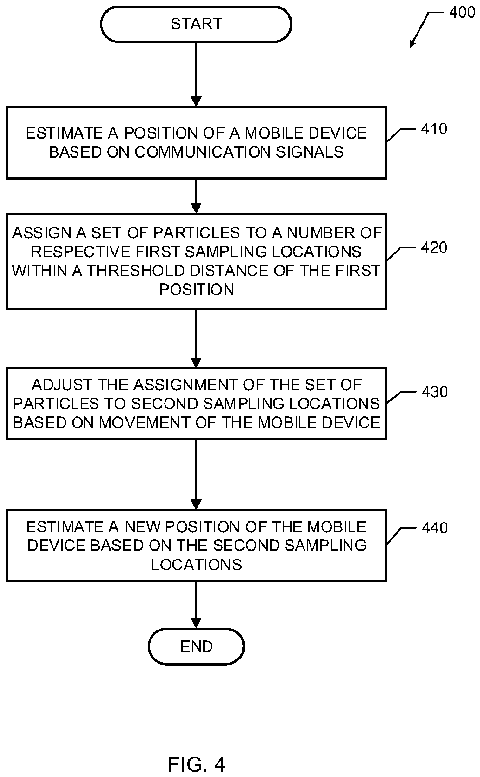

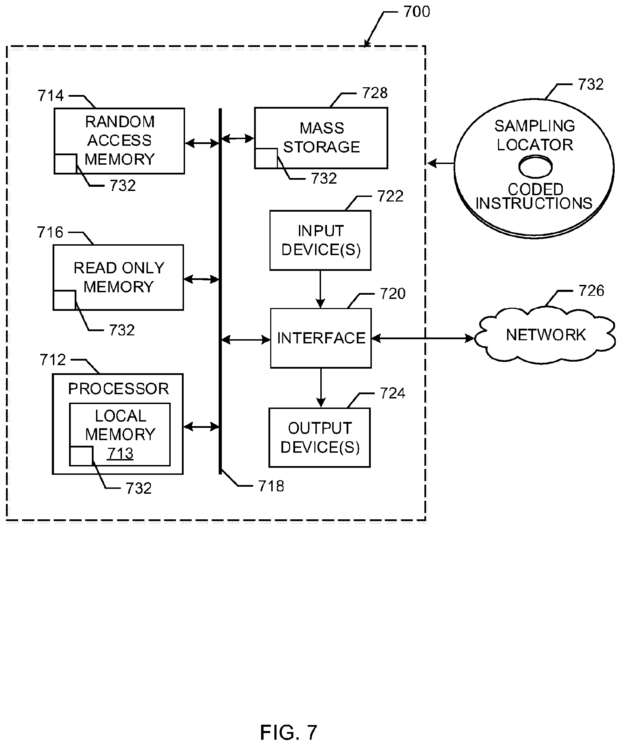

Flowcharts representative of example machine readable instructions for implementing the sampling locator 110 of FIG. 2 are shown in FIGS. 4, 5, and 6. In this example, the machine readable instructions comprise program(s)/process(es) for execution by a processor such as the processor 712 shown in the example processor platform 700 discussed below in connection with FIG. 7. The program(s)/process(es) may be embodied in executable instructions (e.g., software) stored on a non-transitory machine readable storage medium such as a CD-ROM, a floppy disk, a hard drive, a digital versatile disk (DVD), a Blu-ray disk, or a memory associated with the processor 712, but the entirety of the program(s)/process(es) and/or parts thereof could alternatively be executed by a device other than the processor 712 and/or embodied in firmware or dedicated hardware. Further, although the example program(s)/process(es) is/are described with reference to the flowcharts illustrated in FIGS. 4, 5, and 6 many other methods of implementing the example sampling locator 110 may alternatively be used. For example, the order of execution of the blocks may be changed, and/or some of the blocks described may be changed, eliminated, or combined.

The example process 400 of FIG. 4 begins with an initiation of the sampling locator 110 (e.g., upon startup, upon instructions from a user, upon startup of a device implementing the sampling locator 110 (e.g., the mobile device 120), etc.). The example process 400 of FIG. 4 may be executed to estimate an indoor position (or outdoor position) of a mobile device. At block 410, the fingerprint locator 210 estimates a position of the mobile device 120. In some examples, the fingerprint locator 210 may use RSSIs of communication signals (e.g., communication signals received from the beacons 140) received by the mobile device 120, and compare the RSSIs of the communication signals to RSSIs of communication signals at measured locations near the location of the mobile device 120 in the fingerprint database. Based on the comparison, at block 410, the fingerprint locator 210 may deduce or estimate a location of the mobile device 120.

At block 420 of the example of FIG. 4, the particle allocator assigns a set of particles to a number of respective first sampling locations within a threshold distance of the first position. For example, at block 420, the particle allocator 220 may randomly select coordinates of sampling locations within a radius (i.e., the threshold distance) of the estimated position. The particle allocator 220 may then adjust the assignment of the first set of particles to second sampling locations based on movement of the mobile device. For example, at block 430, after the sensor analyzer 230 detects movement of the mobile device 120, the particle allocator 220 may move the particles according to the inertial movement of the mobile device 120 measured by sensors (e.g., accelerometers, gyroscopes, cameras, etc.) of the mobile device 120. In some examples, the particle allocator 220 may apply a random drift to the movement calculation to randomly distribute the particles.

At block 440 of FIG. 4, the example position calculator 240 estimates a new position of the mobile device 120 based on the second sampling locations. For example, at block 440, the position calculator 240 may average coordinates (e.g., calculate mean coordinates) of the second sampling locations. After block 440, the example process 400 of FIG. 4 ends. In some examples, after block 440, control may return to block 410 to continue to estimate the location of the mobile device 120.

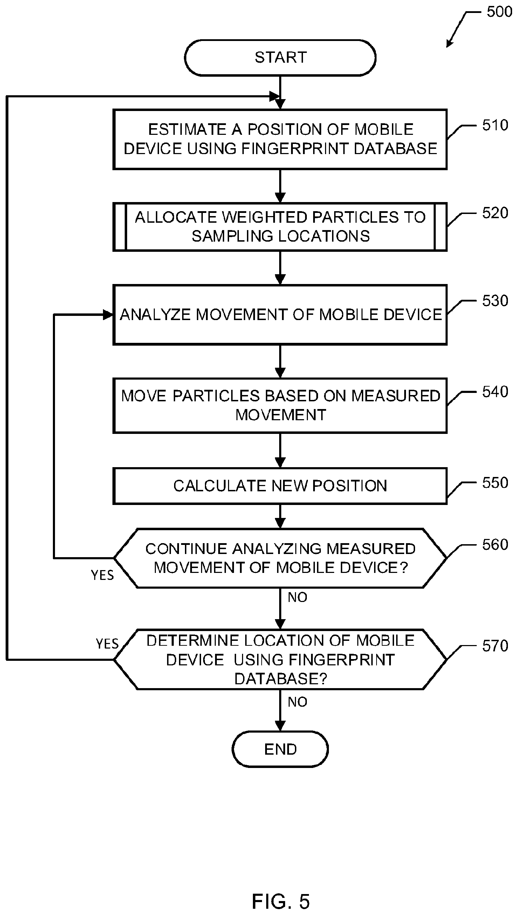

The example process 500 of FIG. 5 begins with an initiation of the sampling locator 110. The example process 500 of FIG. 5 may be implemented to iteratively estimate the position of the mobile device 120 in accordance with examples herein. In examples herein, the position of the mobile device 120 estimated at any point of the example process 500 of FIG. 5 may be indicated on a display of the mobile device 120 or any other display in communication with the mobile device 120.

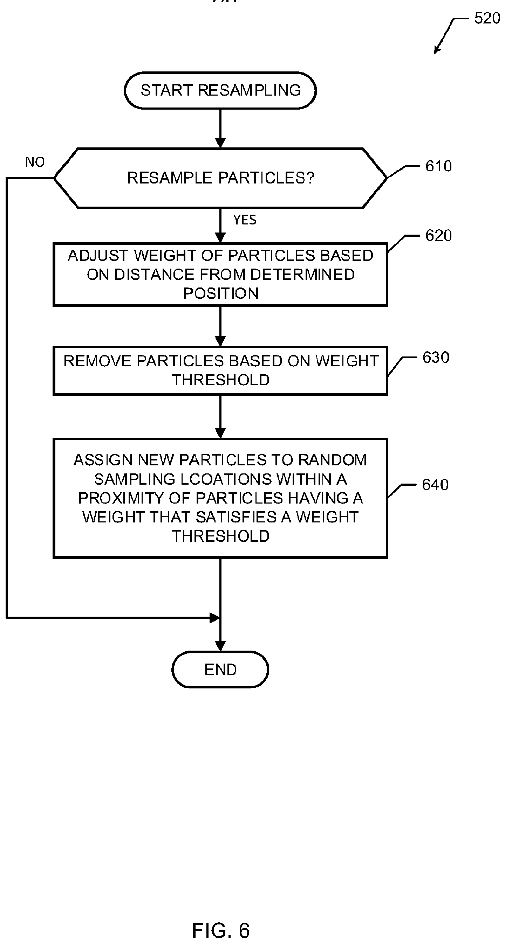

At block 510 of FIG. 5, the example fingerprint locator 210 estimates a position of the mobile device 120 based on communication signals (e.g., using a fingerprint database). At block 520, the particle allocator 220 allocates weighted particles to sampling locations. For example, at block 520, the particle allocator 220 may randomly assign particles to sampling locations within a threshold distance of the estimated position in block 510. Additionally, at block 520, the particle allocator 520 may assign weights to the particles based on a distance between the sampling locations and the estimated position of the mobile device 120. In some examples, as discussed below in connection with FIG. 6, the particle allocator 220 may resample particles at block 520 of FIG. 5.

At block 530, the particle allocator 220 analyzes movement of the mobile device 120 provided by the sensor analyzer 230. At block 540, the particle allocator 220 moves the particles to new sampling locations by determining new sampling coordinates of the new sampling locations calculated in accordance with the movement and a random drift. At block 550, the position calculator 240 may calculate a new position of the mobile device 120 by averaging the coordinates of the new sampling locations determined after moving the particles. At block 560, the sampling locator 110 determines whether to continue analyzing measured movement of the mobile device 120. For example, if a threshold period of time has passed (e.g., 5 seconds), the particle allocator 220 has estimated the new position of the mobile device 120 a threshold number of times (e.g., 5 times), or a new position estimation has been received from the fingerprint locator 210, control may advance to block 570; if not, control may return to block 530.

At block 570, the sampling locator 110 determines whether to estimate the location of the mobile device 120 using the fingerprint database. If the sampling locator 110 is to continue to estimate the location of the mobile device 120 using the fingerprint database (e.g., a threshold period of time has passed since block 510), then control returns to block 510. If, at block 570, the sampling locator 110 is not to estimate a location of the mobile device 120 using the fingerprint database (e.g., due to a shutdown, a failure, etc. of the sampling locator 110), then the example process 500 ends.

The example process 600 of FIG. 6 may begin in response the particle allocator 220 resampling the particles (e.g., after the fingerprint locator 210 estimates a location of the mobile device 120 using a fingerprint database). The example process 600 of FIG. 6 may be executed to implement block 520 of FIG. 5. At block 610, the particle allocator 220 determines whether to resample particles of the particle filter. If the particle allocator 220 determines that the particles are not to be resampled (e.g., the fingerprint locator 210 failed to estimate a new location, the mobile device 120 has not moved relative to the particles, the particles were assigned without any movement of the mobile device 120, etc.), then the example process 600 ends. If, at block 610, the particle allocator 220 determines that the particles are to be resampled, then the particle allocator 220 adjusts weights of the particles based on distances between the respective particles and the position of the mobile device 120 estimated by the fingerprint locator 210. For example, at block 610, the particle allocator 220 may assign higher weights to particles located nearer the estimated position of the mobile device 120 and lower weights to particles located further from the estimated position of the mobile device 120.

At block 630, the example particle allocator 220 may remove particles based on a weight threshold. For example, at block 630, if the weights of the particle do not satisfy a weight threshold (e.g., the weights are below or above the weight threshold), then the particle allocator 220 may remove the particles from the sample. At block 640, the particle allocator 220 assigns new particles (with corresponding weights) to random sampling locations within a proximity (e.g., determined by a threshold distance or area) of particles having a weight that satisfies a weight threshold (e.g., a weight threshold representative of relatively close proximity to the position of the mobile device 120 estimated by the fingerprint locator 210). In some examples, the weight threshold to remove the particles may be the same as the weight threshold used when determining locations around which particles the new particles are to be allocated. Accordingly, after executing block 640 of the example process 600 of FIG. 6, the particles of the particle filter have been resampled. After block 640, the example process 600 ends.

As mentioned above, the example processes of FIGS. 4, 5 and/or 6 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example processes of FIGS. 4, 5, and/or 6 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. As used herein, when the phrase "at least" is used as the transition term in a preamble of a claim, it is open-ended in the same manner as the term "comprising" is open ended. As used herein the term "a" or "an" may mean "at least one," and therefore, "a" or "an" do not necessarily limit a particular element to a single element when used to describe the element. As used herein, when the term "or" is used in a series, it is not, unless otherwise indicated, considered an "exclusive or."

FIG. 7 is a block diagram of an example processor platform 700 capable of executing the instructions of FIGS. 4, 5, and/or 6 to implement the sampling locator 110 of FIG. 2. The example processor platform 700 may be or may be included in any type of apparatus, such as a mobile device (e.g., a cell phone, a smart phone, a tablet, etc.), a server, a personal computer, a personal digital assistant (PDA), an Internet appliance, or any other type of computing device.

The processor platform 700 of the illustrated example of FIG. 7 includes a processor 712. The processor 712 of the illustrated example is hardware. For example, the processor 712 can be implemented by at least one integrated circuit, logic circuit, microprocessor or controller from any desired family or manufacturer.

The processor 712 of the illustrated example includes a local memory 713 (e.g., a cache). The processor 712 of the illustrated example is in communication with a main memory including a random access memory 714 and a read-only memory 716 (or non-volatile memory) via a bus 718. The random access memory 714 (or other volatile memory) may be implemented by Synchronous Dynamic Random Access Memory (SDRAM), Dynamic Random Access Memory (DRAM), RAMBUS Dynamic Random Access Memory (RDRAM) and/or any other type of random access memory device. The nonvolatile memory 716 may be implemented by flash memory and/or any other desired type of memory device. Access to the main memory 714, 716 is controlled by a memory controller.

The processor platform 700 of the illustrated example also includes an interface circuit 720. The interface circuit 720 may be implemented by any type of interface standard, such as an Ethernet interface, a universal serial bus (USB), and/or a peripheral component interconnect (PCI) express interface.

In the illustrated example, at least one input device 722 is connected to the interface circuit 720. The input device(s) 722 permit(s) a user to enter data and commands into the processor 712. The input device(s) can be implemented by, for example, an audio sensor, a microphone, a camera (still or video), a keyboard, a button, a mouse, a touchscreen, a track-pad, a trackball, isopoint and/or a voice recognition system.

At least one output device 724 is also connected to the interface circuit 720 of the illustrated example. The output device(s) 724 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer and/or speakers). The interface circuit 720 of the illustrated example, thus, may include a graphics driver card, a graphics driver chip or a graphics driver processor.

The interface circuit 720 of the illustrated example also includes a communication device such as a transmitter, a receiver, a transceiver, a modem and/or network interface card to facilitate exchange of data with external machines (e.g., computing devices of any kind) via a network 726 (e.g., an Ethernet connection, a digital subscriber line (DSL), a telephone line, coaxial cable, a cellular telephone system, Wi-fi, etc.).

The processor platform 700 of the illustrated example also includes at least one mass storage device 728 for storing executable instructions (e.g., software) and/or data. Examples of such mass storage device(s) 728 include floppy disk drives, hard drive disks, compact disk drives, Blu-ray disk drives, RAID systems, and digital versatile disk (DVD) drives.

The coded instructions 732 of FIGS. 4, 5, and/or 6 may be stored in the mass storage device 728, in the local memory 713 in the volatile memory 714, in the nonvolatile memory 716, and/or on a removable tangible computer readable storage medium such as a CD or DVD.

From the foregoing, it will be appreciated that the above disclosed methods, apparatus and articles of manufacture provide a sampling locator for a location based service to estimate the location of a device using a fingerprint database, inertial measurements, and a particle filter. In examples herein, communication signals, such as Bluetooth low-energy signals, may be used to periodically (or aperiodically) estimate a position of a mobile device based RSSIs and a RSSI fingerprint database. Using the initial position and movement measurements from sensors of the mobile device (e.g., an accelerometer or gyroscope), a particle filter may be used to estimate the location of the mobile device. Accordingly, examples herein provide a location based service that may estimate a relatively accurate location of a mobile device indoors. In examples herein, enhanced indoor use is possible through the use of the particular types of communication signals (e.g., the BLE signals), a fingerprint database, measurement data from the mobile device, and a particle filter, rather than the use of signals from satellites, cellular towers, Wi-Fi access points, etc. to triangulate a position of the mobile device suitable for outdoor use or other location based services.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

## Claims

1.   A method comprising:

   estimating a first position (510) of a mobile device (120) within an indoor setting based on first communication signals, wherein the first communication signals are first Bluetooth Low Energy (BLE) signals detected and provided by a plurality of BLE beacons (140) positioned within the indoor setting;
   assigning a first set of particles to a number of respective first sampling locations within a threshold distance of the first position (520) and assigning weights to the particles based on a distance between the first sampling locations and the estimated first position of the mobile device (120); estimating a new position by:

      adjusting the assignment of the first set of particles to second sampling locations based on movement of the mobile device (540);
      estimating a second position of the mobile device within the indoor setting by only averaging coordinates of the second sampling locations (550);
      repeatedly estimating the new position for a number of times (540; 550); and in response to determining that the number of times is equal to a threshold number of times (560) and that a position of the mobile device is to be estimated using communication signals (570):

estimating a third position (510) of the mobile device (120) within the indoor setting based on second communication signals, wherein the second communication signals are second BLE signals detected and provided by the plurality of BLE beacons (140); adjusting sampling weights (620) of the first set of particles based on the distance between the third position and the second sampling locations; and creating a second set of particles based on the sampling weights (630; 640), the second set of particles corresponding to third sampling locations.

2. The method of claim 1, further comprising: estimating a fourth position of the mobile device (120) based on the third sampling locations.

3. The method of claim 1, the second set of particles comprising a particle from the first set of particles, wherein the weight of the particle from the first set of particles satisfies a weight threshold.

4. The method of claim 1, further comprising detecting the movement of the mobile device (120) based on inertial measurements of an accelerometer of the mobile device or inertial measurements of a gyroscope of the mobile device.

5. The method as defined in claim 1, further comprising: determining the first sampling locations to randomly assign the first set of particles to the first sampling locations within an area of the first position, the area defined by the threshold distance.

6. The method as defined in claim 1, further comprising: adjusting the assignment of the first set of particles to the second sampling locations by including a random drift of the first set of particles to the second sampling locations based on the movement.

7. The method of claim 1, further comprising estimating the first position by:

receiving the communication signals from a plurality of beacons (140); comparing received signal strength indications of the communication signals to received signal strength indications of a fingerprint database; and estimating the first position based on location information corresponding to the received signal strength indications in the fingerprint database.

8. An apparatus (110) comprising:

a fingerprint locator (210) to: estimate a first position of a mobile device within an indoor setting based on first communications signals, wherein the first communication signals are first Bluetooth Low Energy (BLE) signals detected and provided by a plurality of BLE beacons (140) positioned within the indoor setting; a sensor analyzer (230) to measure movement of the mobile device (120); a particle allocator (220) to:

assign a first set of particles to a number of respective first sampling locations within a threshold distance of the first position and assign weights to the particles based on a distance between the first sampling locations and the estimated first position of the mobile device (120); adjust the assignment of the first set of particles to second sampling locations based on movement of the mobile device;

a position calculator (240) to: estimate a second position of the mobile device within the indoor setting by only averaging coordinates of the second sampling locations; the apparatus being configured to repeatedly estimate a new position for a number of times using the particle allocator (220) and the position calculator (240); the apparatus (110) being further configured to: determine whether the number of times is equal to a threshold number of times and that a position of the mobile device is to be estimated using communication signals; wherein in response to determining that the number of times is equal to a threshold number of times and that a position of the mobile device is to be estimated using communication signals the apparatus (110) is configured to:

cause the fingerprint locator to: estimate a third position of the mobile device (120) within the indoor setting based on second communication signals, wherein the second communication signals are second BLE signals detected and provided by the plurality of BLE beacons (140); and to: cause the particle allocator to:

adjust sampling weights of the first set of particles based on the distance between the third position and the second sampling locations; and

create a second set of particles based on the sampling weights, the second set of particles corresponding to third sampling locations.

9. A non-transitory machine readable storage medium comprising instructions that, when executed on an apparatus according to claim 8, causes that apparatus to at least:

estimate a first position (510) of a mobile device within an indoor setting based on first communication signals, wherein the first communication signals are first Bluetooth Low Energy (BLE) signals detected and provided by a plurality of BLE beacons (140) positioned within the indoor setting;

assign a first set of particles to a number of respective sampling locations within a threshold distance of the first position (520) and assign weights to the particles based on a distance between the first sampling locations and the estimated first position of the mobile device (120);

estimate a new position by:

adjusting the assignment of the first set of particles to second sampling locations based on the movement of the mobile device (540); and

estimating a second position of the mobile device within the indoor setting by only averaging coordinates of the second sampling locations (550);

repeatedly estimating the new position for a number of times (540; 550); and in response to determining that the number of times is equal to a threshold number of times (560) and that a position of the mobile device is to be estimated using communication signals (570):

estimate a third position (510) of the mobile device (120) within the indoor setting based on second communication signals, wherein the second communication signals are second BLE signals detected and provided by the plurality of BLE beacons (140);

adjust sampling weights (620) of the first set of particles based on the distance between the third position and the second sampling locations; and

create a second set of particles based on the sampling weights (630; 640), the second set of particles corresponding to third sampling locations.

**Patentansprüche**

1. Verfahren, umfassend:

Schätzen einer ersten Position (510) einer mobilen Vorrichtung (120) in einer Innenraumumgebung basierend auf ersten Kommunikationssignalen, wobei die ersten Kommunikationssignale erste Bluetooth Low Energy- bzw. BLE-Signale sind, die durch eine Vielzahl von BLE-Baken (140), die in der Innenraumumgebung positioniert sind, detektiert und bereitgestellt werden;

Zuweisen einer ersten Menge von Partikeln zu einer Anzahl von jeweiligen ersten Abtastorten innerhalb einer Schwellendistanz zu der ersten Position (520) und Zuweisen von Gewichten zu den Partikeln basierend auf einer Distanz zwischen den ersten Abtastorten und der geschätzten ersten Position der mobilen Vorrichtung (120);

Schätzen einer neuen Position durch:

Anpassen der Zuweisung der ersten Menge von Partikeln an zweite Abtastorte basierend auf einer Bewegung der mobilen Vorrichtung (540);

Schätzen einer zweiten Position der mobilen Vorrichtung innerhalb der Innenraumumgebung durch nur Mitteln von Koordinaten der zweiten Abtastorte (550);

wiederholtes Schätzen der neuen Position eine Anzahl von Malen (540; 550); und als Reaktion auf die Bestimmung, dass die Anzahl von Malen gleich einer Schwellenanzahl von Malen (560) ist und dass eine Position der mobilen Vorrichtung unter Verwendung von Kommunikationssignalen (570) zu schätzen ist:

Schätzen einer dritten Position (510) der mobilen Vorrichtung (120) innerhalb der Innenraumumgebung basierend auf zweiten Kommunikationssignalen, wobei die zweiten Kommunikationssignale zweite BLE-Signale sind, die durch die Vielzahl von BLE-Baken (140) detektiert und bereitgestellt werden;

Anpassen von Abtastgewichten (620) der ersten Menge von Partikeln basierend auf der Distanz zwischen der dritten Position und den zweiten Abtastorten; und

Erzeugen einer zweiten Menge von Partikeln basierend auf den Abtastgewichten (630; 640), wobei die zweite Menge von Partikeln den dritten Abtastorten entspricht.

2.  Verfahren nach Anspruch 1, ferner umfassend: Schätzen einer vierten Position der mobilen Vorrichtung (120) basierend auf den dritten Abtastorten.

3.  Verfahren nach Anspruch 1, wobei die zweite Menge von Partikeln ein Partikel aus der ersten Menge von Partikeln umfasst, wobei das Gewicht des Partikels aus der ersten Menge von Partikeln einen Gewicht-Schwellenwert befriedigt.

4.  Verfahren nach Anspruch 1, ferner umfassend Detektieren der Bewegung der mobilen Vorrichtung (120) basierend auf Trägheitsmessungen eines Beschleunigungsmessers der mobilen Vorrichtung oder Trägheitsmessungen eines Gyroskops der mobilen Vorrichtung.

5.  Verfahren nach Anspruch 1, ferner umfassend: Bestimmen der ersten Abtastorte, um die erste Menge von Partikeln zu den ersten Abtastorten innerhalb eines Bereichs der ersten Position zufällig zuzuweisen, wobei der Bereich durch die Schwellendistanz definiert ist.

6.  Verfahren nach Anspruch 1, ferner umfassend: Anpassen der Zuweisung der ersten Menge von Partikeln zu den zweiten Abtastorten durch Einbeziehen einer zufälligen Drift der ersten Menge von Partikeln zu den zweiten Abtastorten basierend auf der Bewegung.

7.  Verfahren nach Anspruch 1, ferner umfassend Schätzen der ersten Position durch:

    Empfangen der Kommunikationssignale von einer Vielzahl von Baken (140);
    Vergleichen empfangener Signalstärkeangaben der Kommunikationssignale mit empfangenen Signalstärkeangaben einer Fingerabdruck-Datenbank; und
    Schätzen der ersten Position basierend auf Ortsinformationen, die den empfangenen Signalstärkeangaben entsprechen, in der Fingerabdruck-Datenbank.

8.  Gerät (110), umfassend:
    einen Fingerabdruck-Lokalisierer (210) zum:

    Schätzen einer ersten Position einer mobilen Vorrichtung in einer Innenraumumgebung basierend auf ersten Kommunikationssignalen, wobei die ersten Kommunikationssignale erste Bluetooth Low Energy- bzw. BLE-Signale sind, die durch eine Vielzahl von BLE-Baken (140), die in der Innenraumumgebung positioniert sind, detektiert und bereitgestellt werden;

einen Sensoranalysator (230) zum Messen einer Bewegung der mobilen Vorrichtung (120);
einen Partikelzuteiler (220) zum:

Zuweisen einer ersten Menge von Partikeln zu einer Anzahl von jeweiligen ersten Abtastorten innerhalb einer Schwellendistanz zu der ersten Position und Zuweisen von Gewichten zu den Partikeln basierend auf einer Distanz zwischen den ersten Abtastorten und der geschätzten ersten Position der mobilen Vorrichtung (120);
Anpassen der Zuweisung der ersten Menge von Partikeln an zweite Abtastorte basierend auf einer Bewegung der mobilen Vorrichtung;
einen Positionsrechner (240) zum:

Schätzen einer zweiten Position der mobilen Vorrichtung innerhalb der Innenraumumgebung durch nur Mitteln von Koordinaten der zweiten Abtastorte;
wobei das Gerät konfiguriert ist, wiederholt eine neue Position eine Anzahl von Malen unter Verwendung des Partikelzuteilers (220) und des Positionsrechners (240) zu schätzen;
wobei das Gerät (110) ferner konfiguriert ist zum:

Bestimmen, ob die Anzahl von Malen gleich einer Schwellenanzahl von Malen ist und dass eine Position der mobilen Vorrichtung unter Verwendung von Kommunikationssignalen zu schätzen ist;
wobei als Reaktion auf eine Bestimmung, dass die Anzahl von Malen gleich einer Schwellenanzahl von Malen ist und dass eine Position der mobilen Vorrichtung unter Verwendung von Kommunikationssignalen zu schätzen ist, das Gerät (110) konfiguriert ist zum:

Veranlassen des Fingerabdruck-Lokalisierers zum:
Schätzen einer dritten Position der mobilen Vorrichtung (120) innerhalb der Innenraumumgebung basierend auf zweiten Kommunikationssignalen, wobei die zweiten Kommunikationssignale zweite BLE-Signale sind, die durch die Vielzahl von BLE-Baken (140) detektiert und bereitgestellt werden; und zum: Veranlassen des Partikelzuteilers zum:

Anpassen von Abtastgewichten der ersten Menge von Partikeln basierend auf der Distanz zwischen der dritten Position und den zweiten Abtastorten: und

Erzeugen einer zweiten Menge von Partikeln basierend auf den Abtastgewichten, wobei die zweite Menge von Partikeln den dritten Abtastorten entspricht.

9. Nicht transitorisches maschinenlesbares Speichermedium, das Anweisungen umfasst, die, wenn sie in einem Gerät nach Anspruch 8 ausgeführt werden, das Gerät veranlassen zum mindestens:

Schätzen einer ersten Position (510) einer mobilen Vorrichtung in einer Innenraumumgebung basierend auf ersten Kommunikationssignalen, wobei die ersten Kommunikationssignale erste Bluetooth Low Energy- bzw. BLE-Signale sind, die durch eine Vielzahl von BLE-Baken (140), die in der Innenraumumgebung positioniert sind, detektiert und bereitgestellt werden;

Zuweisen einer ersten Menge von Partikeln zu einer Anzahl von jeweiligen Abtastorten innerhalb einer Schwellendistanz von der ersten Position (520) und Zuweisen von Gewichten zu den Partikeln basierend auf einer Distanz zwischen den ersten Abtastorten und der geschätzten ersten Position der mobilen Vorrichtung (120);

Schätzen einer neuen Position durch:

Anpassen der Zuweisung der ersten Menge von Partikeln an zweite Abtastorte basierend auf der Bewegung der mobilen Vorrichtung (540); und

Schätzen einer zweiten Position der mobilen Vorrichtung innerhalb der Innenraumumgebung durch nur Mitteln von Koordinaten der zweiten Abtastorte (550);

wiederholtes Schätzen der neuen Position eine Anzahl von Malen (540; 550); und als Reaktion auf eine Bestimmung, dass die Anzahl von Malen gleich einer Schwellenanzahl von Malen (560) ist und dass eine Position der mobilen Vorrichtung unter Verwendung von Kommunikationssignalen (570) zu schätzen ist:

Schätzen einer dritten Position (510) der mobilen Vorrichtung (120) innerhalb der Innenraumumgebung basierend auf zweiten Kommunikationssignalen, wobei die zweiten Kommunikationssignale zweite BLE-Signale sind, die durch die Vielzahl von BLE-Baken (140) detektiert und bereitgestellt werden;

Anpassen von Abtastgewichten (620) der ersten Menge von Partikeln basierend auf der Distanz zwischen der dritten Position und den zweiten Abtastorten; und

Erzeugen einer zweiten Menge von Partikeln basierend auf den Abtastgewichten (630; 640), wobei die zweite Menge von Partikeln den dritten Abtastorten entspricht.

**Revendications**

1. Procédé comprenant:

l'estimation d'une première position (510) d'un dispositif mobile (120) dans un environnement intérieur sur la base de premiers signaux de communication, dans lequel les premiers signaux de communication sont des premiers signaux Bluetooth à basse énergie détectés (BLE) et fournis par une pluralité de balises BLE (140) positionnées dans l'environnement intérieur;

l'attribution d'un premier ensemble de particules à un nombre de premiers emplacements d'échantillonnage respectifs à l'intérieur d'une distance seuil de la première position (520) et l'attribution de pondérations aux particules sur la base d'une distance entre les premiers emplacements d'échantillonnage et la première position estimée du dispositif mobile (120);

l'estimation d'une nouvelle position en:

ajustant l'attribution du premier ensemble de particules à de seconds emplacements d'échantillonnage sur la base d'un mouvement du dispositif mobile (540);

estimant une seconde position du dispositif mobile dans l'environnement intérieur en effectuant seulement une moyenne de coordonnées des seconds emplacements d'échantillonnage (550);

estimant de manière répétée la nouvelle position pour un nombre de fois (540; 550); et en réponse à la détermination que le nombre de fois est égal à un nombre seuil de fois (560) et qu'une position du dispositif mobile est à estimer en utilisant des signaux de communication (570):

estimant une troisième position (510) du dispositif mobile (120) dans l'environnement intérieur sur la base de seconds signaux de communication, dans lequel les seconds signaux de communication sont de seconds signaux BLE détectés et fournis par la pluralité de balises BLE (140);

ajustant des pondérations d'échantillonnage (620) du premier ensemble de particules sur la base de la distance entre la troisième position et les seconds emplacements d'échantillonnage; et

créant un second ensemble de particules sur la base des pondérations d'échantillonnage (630; 640), le second ensemble de particules correspondant à de troisièmes emplacements d'échantillonnage.

2. Procédé selon la revendication 1, comprenant en outre: l'estimation d'une quatrième position du dispositif mobile (120) sur la base des troisièmes emplacements d'échantillonnage.

3. Procédé selon la revendication 1, le second ensemble de particules comprenant une particule d'un premier ensemble de particules, dans lequel le poids de la particule du premier ensemble de particules satisfait un seuil de pondération.

4. Procédé selon la revendication 1, comprenant en outre la détection du mouvement du dispositif mobile (120) sur la base de mesures inertielles d'un accéléromètre du dispositif mobile ou de mesures inertielles d'un gyroscope du dispositif mobile.

5. Procédé selon la revendication 1, comprenant en outre:
la détermination de premiers emplacements d'échantillonnage pour attribuer aléatoirement le premier ensemble de particules des premiers emplacements d'échantillonnage à l'intérieur d'une zone de la première position, la zone étant définie par la distance seuil.

6. Procédé tel que défini selon la revendication 1, comprenant en outre:
l'ajustement de l'attribution du premier ensemble de particules aux seconds emplacements d'échantillonnage en incluant une dérive aléatoire du premier ensemble de particules aux seconds emplacements d'échantillonnage sur la base du mouvement.

7. Procédé selon la revendication 1, comprenant en outre l'estimation de la première position en:

recevant les signaux de communication d'une pluralité de balises (140);

comparant des indications de force de signal reçues des signaux de communication aux indications de force de signal reçues d'une base de données d'empreintes; et

estimant la première position sur la base d'informations d'emplacement correspondant aux indications de force de signal reçues dans la base de données d'empreintes.

8. Appareil (110) comprenant:
un dispositif de localisation d'empreinte (210) pour:

estimer une première position d'un dispositif mobile dans un environnement intérieur sur la base de premiers signaux de communication, dans lequel les premiers signaux de communication sont des premiers signaux Bluetooth à basse énergie (BLE) détectés et fournis par une pluralité de balises BLE (140) positionnées dans l'environnement intérieur;

un analyseur de capteur (230) pour mesurer un mouvement du dispositif mobile (120);

un dispositif d'allocation de particules (220) pour:

attribuer un premier ensemble de particules à un nombre de premiers emplacements d'échantillonnage respectifs l'intérieur d'une distance seuil de la première position et attribuer des pondérations aux particules sur la base d'une distance entre les premiers emplacements d'échantillonnage et la première position estimée du dispositif mobile (120);

ajuster l'attribution du premier ensemble de particules à des seconds emplacements d'échantillonnage sur la base d'un mouvement du dispositif mobile;

un calculateur de position (240) pour:

estimer une seconde position du dispositif mobile dans l'environnement intérieur en effectuant seulement une moyenne de coordonnées des seconds emplacements d'échantillonnage ;

l'appareil étant configuré pour estimer de manière répétée une nouvelle position pour un nombre de fois en utilisant le dispositif d'attribution de particules (220) et le calculateur de position (240);

l'appareil (110) étant configuré en outre pour:

déterminer si le nombre de fois est égal à un nombre seuil de fois et qu'une position du dispositif mobile est à estimer en utilisant des signaux de communication;

dans lequel en réponse à la détermination que le nombre de fois est égal à un nombre seuil de fois et qu'une position du dispositif mobile est à estimer en utilisant des signaux de communication l'appareil (110) est configuré pour:

amener le dispositif de localisation d'empreinte à:

estimer une troisième position du dispositif mobile (120) dans l'environnement intérieur sur la base de seconds signaux de communication, dans lequel les seconds signaux de communication sont des seconds signaux BLE détectés et fournis par la pluralité de balises BLE (140); et pour:

amener le dispositif d'attribution de particules à:

ajuster des pondérations d'échantillonnage du premier ensemble de particules sur la base de la distance entre la troisième position et les seconds emplacements d'échantillonnage; et

créer un second ensemble de particules sur la base des pondérations d'échantillonnage, le second ensemble de particules correspondant aux troisièmes emplacements d'échantillonnage.

**9.** Support de stockage lisible par machine non transitoire comprenant des instructions qui, lorsqu'exécutées sur un appareil selon la revendication 8, amène l'appareil à au moins:

estimer une première position (510) d'un dispositif mobile dans un environnement intérieur sur la base de premiers signaux de communication, dans lequel les premiers signaux de communication sont des premiers signaux Bluetooth à basse énergie (BLE) détectés et fournis par une pluralité de balises BLE (140) positionnées dans l'environnement intérieur;

attribuer un premier ensemble de particules à un nombre d'emplacements d'échantillonnage respectifs à l'intérieur d'une distance seuil de la première position (520) et attribuer des pondérations aux particules sur la base d'une distance entre les premiers emplacements d'échantillonnage et la première position estimée du dispositif mobile (120);

estimer une nouvelle position en:

ajustant l'attribution du premier ensemble de particules à de seconds emplacements d'échantillonnage sur la base d'un mouvement du dispositif mobile (540); et

estimant une seconde position du dispositif mobile dans l'environnement intérieur en effectuant seulement une moyenne de coordonnées des seconds emplacements d'échantillonnage (550);

estimant de manière répétée la nouvelle position pour un nombre de fois (540; 550); et en réponse à la détermination que le nombre de fois est égal à un nombre seuil de fois (560) et qu'une position du dispositif mobile est à estimer en utilisant des signaux de communication (570):

estimant une troisième position (510) du dispositif mobile (120) dans l'environnement intérieur sur la base de seconds signaux de communication, dans lequel les seconds signaux de communication sont des seconds signaux BLE détectés et fournis par la pluralité de balises BLE (140);

ajustant des pondérations d'échantillonnage (620) du premier ensemble de particules sur la base de la distance entre la troisième position et les seconds emplacements d'échantillonnage; et

créant un second ensemble de particules sur la base des pondérations d'échantillonnage (630; 640), le second ensemble de particules correspondant à de troisièmes emplacements d'échantillonnage.

BEACON 140

BEACON 140

BEACON 140

BEACON 140

BEACON 140

100

102

MOBILE
DEVICE
120

SAMPLING
LOCATOR
110

104

FIG. 1

EP 3 314 927 B1

15

110

SAMPLING LOCATOR

210

FINGERPRINT
LOCATOR

250

220

PARTICLE
ALLOCATOR

230

SENSOR
ANALYZER

240

POSITION
CALCULATOR

FIG. 2

. . . .

STEP 1

FINGERPRINT
LOCATOR
210

314
310
316

STEP 2

PARTICLE
ALLOCATOR

320
322

STEP 3

SENSOR
ANALYZER

310
330

STEP 4

PARTICLE
ALLOCATOR

322
320

FIG. 3A

FIG. 3B

```
                           ┌─────────────┐
                           │    START    │                    ╭─ 400
                           └──────┬──────┘                  ↙
                                  │
                                  ▼
              ┌───────────────────────────────────────┐
              │ ESTIMATE A POSITION OF A MOBILE DEVICE │ ╭─ 410
              │      BASED ON COMMUNICATION SIGNALS    │
              └────────────────────┬──────────────────┘
                                   │
                                   ▼
              ┌───────────────────────────────────────┐
              │  ASSIGN A SET OF PARTICLES TO A NUMBER OF │
              │  RESPECTIVE FIRST SAMPLING LOCATIONS     │ ╭─ 420
              │  WITHIN A THRESHOLD DISTANCE OF THE FIRST│
              │              POSITION                   │
              └────────────────────┬──────────────────┘
                                   │
                                   ▼
              ┌───────────────────────────────────────┐
              │   ADJUST THE ASSIGNMENT OF THE SET OF   │
              │  PARTICLES TO SECOND SAMPLING LOCATIONS │ ╭─ 430
              │  BASED ON MOVEMENT OF THE MOBILE DEVICE │
              └────────────────────┬──────────────────┘
                                   │
                                   ▼
              ┌───────────────────────────────────────┐
              │  ESTIMATE A NEW POSITION OF THE MOBILE  │
              │  DEVICE BASED ON THE SECOND SAMPLING    │ ╭─ 440
              │              LOCATIONS                  │
              └────────────────────┬──────────────────┘
                                   │
                                   ▼
                           ┌─────────────┐
                           │     END     │
                           └─────────────┘
```

FIG. 4

500

START

ESTIMATE A POSITION OF MOBILE
DEVICE USING FINGERPRINT DATABASE — 510

ALLOCATE WEIGHTED PARTICLES TO
SAMPLING LOCATIONS — 520

ANALYZE MOVEMENT OF MOBILE DEVICE — 530

MOVE PARTICLES BASED ON MEASURED
MOVEMENT — 540

CALCULATE NEW POSITION — 550

CONTINUE ANALYZING MEASURED
MOVEMENT OF MOBILE DEVICE? — 560

YES

NO

DETERMINE LOCATION OF MOBILE
DEVICE USING FINGERPRINT
DATABASE? — 570

YES

NO

END

FIG. 5

. . . .

520

START RESAMPLING

NO ⟵ RESAMPLE PARTICLES? ⟶ 610

YES

ADJUST WEIGHT OF PARTICLES BASED ON DISTANCE FROM DETERMINED POSITION — 620

REMOVE PARTICLES BASED ON WEIGHT THRESHOLD — 630

ASSIGN NEW PARTICLES TO RANDOM SAMPLING LCOATIONS WITHIN A PROXIMITY OF PARTICLES HAVING A WEIGHT THAT SATISFIES A WEIGHT THRESHOLD — 640

END

FIG. 6

FIG. 7

**EP 3 314 927 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014171118 A1
- US 2011032152 A1
- US 2012330600 A1